# EUROPEAN PATENT APPLICATION

(11) **EP 2 995 480 A1**
(43) Date of publication of application: **16.03.2016**
(21) Application number: 15184775.3
(22) Date of filing: 11.09.2015
(51) Int. Cl.: B60D 1/56, B60R 9/00, B60R 9/06

(54) **A FIXING DEVICE**

(30) Priority: 12.09.2014 GB 201416115
(71) Applicant: Broadbent, Michael, Buckinghamshire MK10 7BG (GB)
(72) Inventor: Broadbent, Michael, Buckinghamshire MK10 7BG (GB)
(74) Representative: Turner, Richard Charles

(57) **Abstract**

A fixing device 10 comprises a plate 12 provided with a hole 14, a tube 16 connected to the plate 12 and extending away from the plate 12, a tab 18 connected to one edge of the plate 12 and extending away from the plate 12, and a bolt 20 passing through the hole 14 of the plate 12 and for connecting to a towing eye 22 of a bumper beam 24 of a vehicle.

## Description

This invention relates to a fixing device.

It is known to carry articles externally on vehicles, for example on the back of a vehicle or on the roof. For example, cars are often provided with roof racks that support additional items being carried. Current exterior fixing devices attached to automobiles, such as bike racks, have some drawbacks. Those devices fixed to the roof of the vehicle are hard to access and increase drag on the vehicle when the vehicle is in motion. Those devices fixed to the back door of the vehicle are liable to rub the paintwork off, and make opening the tailgate more difficult due to their weight. Those devices fixed to a tow-bar of a vehicle require the purchase of a tow-bar which is often expensive.

It is therefore an object of the invention to improve upon the known art.

According to the present invention, there is provided a fixing device comprising a plate provided with a hole, a tube connected to the plate and extending away from the plate, a tab connected to one edge of the plate and extending away from the plate, and a bolt passing through the hole of the plate and for connecting to a towing eye of a bumper beam of a vehicle.

Owing to the invention, it is possible to provide a cheap solution, which is easy to access at the rear of a vehicle, and be fixed such that the tailgate is not loaded, and cheaper than current known solutions. The invention provides for no contact to exterior panels, and the universal rear fitting allows for different features to be provided. The invention provides exterior fixing device for rear of vehicle. An exterior fixing device is provided that attaches to an emergency towing device of a vehicle. Rotation is restricted and further attachments can be fixed by means of loading to rear end of tube and locking in place.

All vehicles must provide emergency towing device at the rear of the vehicle. Some provide a screw boss behind a small cover in the bumper. Others provide a looped wire through or under the bumper fascia. These devices are strong enough to carry vehicle loads for emergency towing. The current invention provides a bracket fixed to the vehicle through the emergency towing device, with an anti-rotation feature to provide consistent orientation and avoid unlocking.

In some cases the bracket passes though the aperture in the rear bumper left when removing the small cover. At the rear end of the bracket is provided a 'hitch type' fixing such that an array of devices can be catered for; for example a bicycle rack. The small nature of the device allows it to be left attached to vehicle without hindering manoeuvring, and allowing full visibility of lamps and license plate. This secondary attachment allows for simple, no tools, attachment of loading devices. Further these devices may be secured against removal of property.

The invention provides a fixing device attached to an emergency towing device to provide additional carrying function for a vehicle. A fixing device is provided that comprises a short tube which can exit though the bumper fascia. One end of the tube can be fixed to the towing eye of the vehicle by a plate which also incorporates an anti-rotation tab such that the orientation of the tube is always maintained during usage. The exterior fixing device can provide a simple attachment fixing outside of the vehicle, such as a square pipe with hole for locking. The fixing device can comprise a short tube which exits under the bumper fascia. One end of the tube is fixed to the emergency towing hook of the vehicle by a nutplate and bolt arrangement.

Preferably, the tube is rectangular in cross-section. In a first embodiment, the tube is connected to the plate such that the hole in the plate is located at one end of the tube. In a second embodiment, the tube is connected to the plate at an edge of the plate. In this embodiment, the tube is connected to the plate at an opposite edge of the plate to the location of the tab, which is connected to one edge of the plate. The tube can be located in different positions on the plate, depending upon on how it is intended that the fixing device be connected to the bumper beam of the vehicle. If the tube is intended to be located so that the tube protrudes out of the vehicle bumper then the tube will be located so that the hole in the plate is at one end of the tube. If the tube is intended to be located so that the tube is below the level of the vehicle bumper, then the tube will be located at one end of the plate.

Advantageously, the tab is in a plane perpendicular to the plane of the plate. The tab serves the purpose of preventing rotational movement of the fixing device when the fixing device is in position on a bumper beam of a vehicle. This is best achieved by having a tab that is perpendicular to the main plate. The 90 degree angle between the plate and the tab ensure that a good connection is made between the fixing device and a bumper beam of a vehicle, which will generally be rectangular in cross-section. The fixing device will be in contact with the bumper beam on two adjacent sides of the bumper beam, with the plate in a vertical orientation and the tab in a horizontal orientation, either at the top or bottom of the bumper beam (depending on how the fixing device is mounted on the bumper beam). This prevents any rotation of the fixing device when the fixing device is in position and therefore increases the stability and usability of the fixing device.

Ideally, the tube is provided with matching holes on opposite sides of the tube. The holes in the tube support the use of a locking pin, which can be used when a suitable connecting component is connected to the tube. The fixing device is intended to be located on a vehicle's bumper beam and kept in that position by the vehicle's owner, for use as desired. When the vehicle's owner wishes to mount a bike rack on the fixing device, then the owner must connect a suitable bike rack to the tube of the fixing device and this can be achieved by sliding a suitable connecting component into the tube of the fixing device and using a locking pin through the connecting component and through the holes of the tube to lock the two components together.

Embodiments of the present invention will now be described, by way of example only, with reference to the accompanying drawings, in which:-
Figure 1 is a rear view of a vehicle bumper,
Figure 2 is a rear view of a first embodiment of a fixing device connected to a bumper beam,
Figure 3 is a section through the fixing device of Figure 2, and
Figure 4 is a section through a second embodiment of the fixing device.

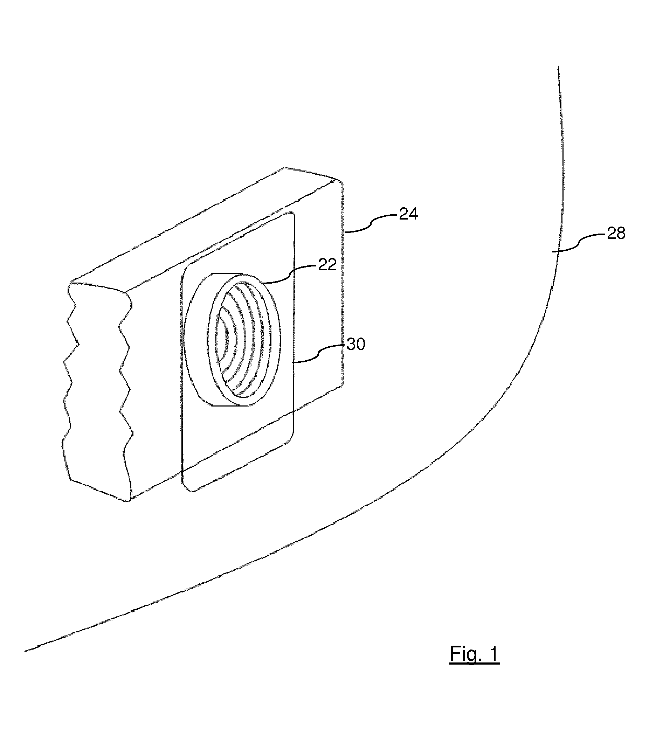

Figure 1 shows a rear bumper 28 of a vehicle that is provided with an opening 30 (shown with cover removed) that provides access to a towing eye 22 that is connected to a bumper beam 24. In general, modern vehicles must provide an emergency method of providing a tow to another vehicle, and this is often achieved by the provision of the towing eye 22 in the bumper beam 24, which is hidden behind a cover in the rear bumper 28. If access to the towing eye 22 is required, then the cover is removed, as shown in Figure 1. The towing eye 22 is a screw-threaded hole that passes entirely through the bumper beam 24.

The bumper beam 24 is provided within the vehicle as part of the chassis of the vehicle and has sufficient strength to support the weight of a second vehicle being towed via the towing eye 22. The towing eye 22 is integral with the bumper beam 24 and supports the connection of other components, given that the towing eye 22 is provided with an internal screw thread. The towing eye 22 can be accessed through the opening 30 by the driver of the vehicle, who is able to connect an additional component to the towing eye 22 through the opening 30. The bumper 28 can also be removed from the vehicle, in order to gain greater access to the bumper beam 24 and the towing eye 22.

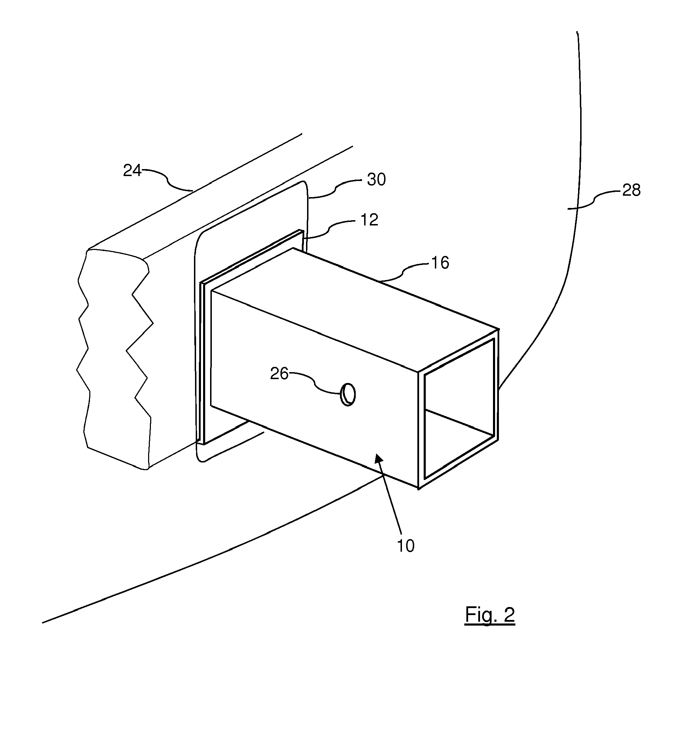

Figure 2 is a view similar to Figure 1, with a fixing device 10 connected to the bumper beam 24. The fixing device 10 comprises a plate 12 and a tube 16, which is connected to the plate 12 and extends away from the plate 12. The fixing device 10 is made of metal and the tube 16 is rectangular in cross-section. The purpose of the fixing device 10 is to provide a method of supporting additional items such as a bike rack being carried by the vehicle, in a simple and efficient manner. The tube 16 of the fixing device 10 is able to be connected by the driver to a bike rack and support the weight of the bike rack and any bicycles carried by the bike rack.

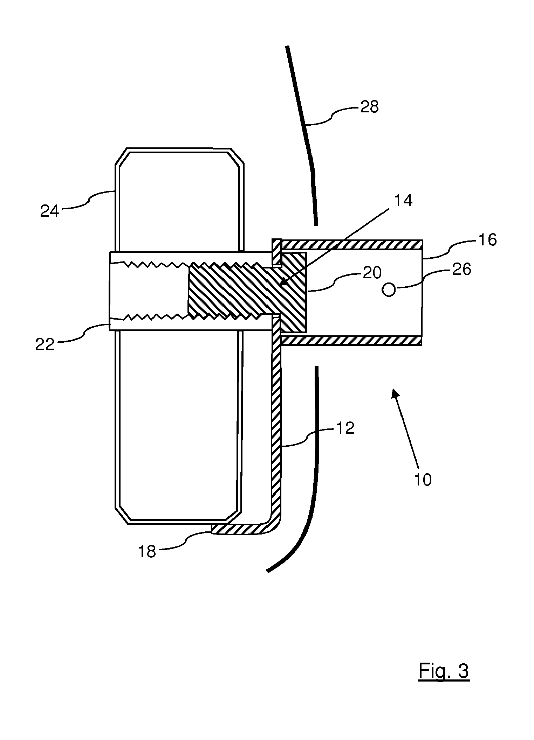

The plate 12 is in a vertical plane and lies against the rear vertical surface of the bumper beam 24. More detail of the specific connection to the bumper beam 24 is disclosed below with reference to Figure 3. The tube 16 is provided with matching holes 26 on opposite sides of the tube 16. The holes 26 in the tube 16 support the use of a locking pin, which can be used, for example, when a suitable connecting component is connected to the tube 16. When the vehicle's owner wishes to mount a bike rack on the fixing device 10, then the owner connects a suitable bike rack to the tube 16 of the fixing device 10 by sliding a suitable connecting component into the tube 16 of the fixing device 10. A locking pin can then be fitted through the connecting component and through the holes 26 of the tube 16 to lock the two components together.

Figure 3 shows a section through the fixing device 10, as it is fitted to the bumper beam 24 of the vehicle. The fixing device 10 comprises a flat plate 12 provided with a hole 14, a tube 16 connected to the plate 12 and extending away from the plate 12, a tab 18 connected to one edge of the plate 12 and extending away from the plate 12, and a bolt 20 passing through the hole 14 of the plate 12 and for connecting to the towing eye 22 of the bumper beam 24 of the vehicle. The bolt 20 locks the fixing device 10 into position on the towing eye 22 of the bumper beam 24.

The tube 16 is rectangular in cross-section and the tube 16 is connected to the plate 12 such that the hole 14 in the plate 12 is located at one end of the tube 16. As can be seen in this Figure, the bolt 20 fixes the plate 12 of the fixing device 10 against the towing eye 22 of the bumper beam 24. The fixing device 10 is rigid in structure and is made of metal. The plate 12 is vertically orientated and the tube 16 is horizontally orientated, with the two components being perpendicular from each other, i.e. being located in planes that are perpendicular from each other.

In this embodiment of the fixing device 10, the plate 12 is a flat plate 12, with the tube 16 connected to one edge of the plate 12 and mounted on the plate 12 and extending in a first direction and the tab 18 connected to an opposite edge of the plate 12 and extending in an opposite direction, when compared to the direction of the tube 16. The tube 16, at one end, terminates at the plate 12, while the other end is open. The tube 16 of the fixing device 10 could be cylindrical, but in this preferred embodiment of the fixing device 10, the tube 16 is rectangular in cross-section, here being a square cross-section.

The vehicle owner attaches the fixing device 10 to the vehicle by opening the cover in the fascia of the bumper 28 and passing the plate 12 and tube 16 (which are integral with one another) through the opening to be located on the towing eye 22. The bolt 20 is then passed through the tube 16 and turned to tighten the fixing device 10 onto the towing eye 22. The tab 18 is connected to one edge of the plate 12 and extends away from the plate 12. The purpose of the tab 18 is to help provide a stable and steady connection between the fixing device 10 and the bumper beam 24, preventing relative rotation of the two parts.

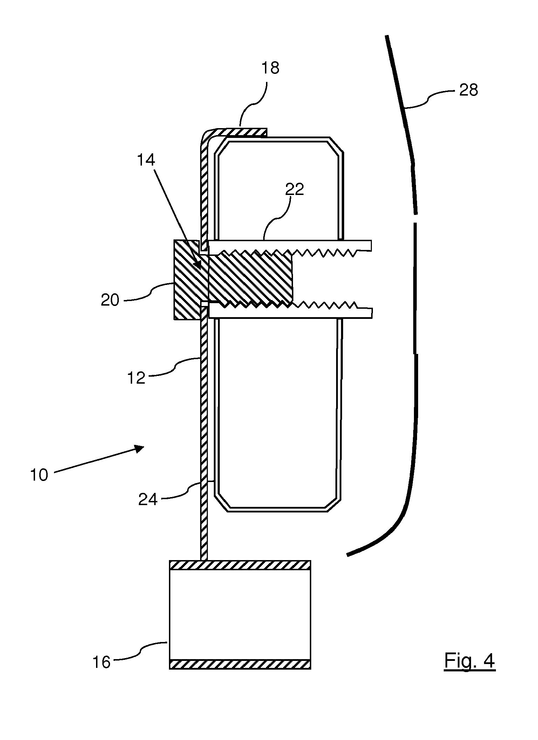

Figure 4 shows an alternative embodiment of the fixing device 10, which is comprised of the same four basic components, the plate 12, the tube 16, the tab 18 and the bolt 20, although in this embodiment, the components are arranged in a slightly different configuration. Instead of being located in the middle of the plate 12, the tube 16 is connected to the plate 12 at an edge of the plate 12. The tube 16 is connected to the plate 12 at an opposite edge of the plate 12 to the location of the tab 18, which is connected to one edge of the plate 12.

The difference in the configuration of the second embodiment of the fixing device 10 shown in Figure 4 is to provide a fixing device 10 that can be located on the opposite side of the bumper beam 24 (when compared to the Figure 3 embodiment). The plate 12 is still in an upright vertical orientation and the tab 18 is still in a horizontal orientation, but the tab 18 engages with the top surface of the bumper beam 24 and the tube 16 is positioned so that it is below the bumper beam 24 and the bumper 28. The bolt 20 connects the fixing device 10 to the bumper beam 24 from the opposite side (when compared to the Figure 3 embodiment).

The Figure 4 embodiment of the fixing device 10 is connected to the towing eye 22 of the bumper beam 24, when the bumper 28 is removed. In order to first position the fixing device 10 of Figure 4, the vehicle owner must remove the bumper 28 and connect the fixing device 10 to the bumper beam 24 from the back. The bumper 28 can then be replaced afterwards. The fixing device 10 in Figure 4 provides all of the advantages of the fixing device 10 of Figure 3, but does not protrude from the back of the vehicle and allows the cover on the bumper 28 to be maintained in position. The tube 16 is accessed from underneath the bumper 28.

In this second embodiment of the fixing device 10, the plate 12 is a U-section plate 12, with the tube 16 connected to one edge of the plate 12 and extending in a first direction and the tab 18 connected to an opposite edge of the plate 12 and extending in the same direction, when compared to the direction of the tube 16. The tube 16 is open at both ends. The tube 16 of the fixing device 10 could be cylindrical, but in this preferred embodiment of the fixing device 10, the tube 16 is rectangular in cross-section, here being a square cross-section.

The two embodiments of the fixing device 10 provide the primary advantage in that they allow additional objects such as a bike rack on a vehicle that is quite simple to implement and is not particularly costly. The fixing device 10 also does not suffer from the drawbacks of prior art solutions in that the fixing device 10 does not add weight to the boot of the vehicle, nor does it affect the paintwork of the vehicle and nor does it create any additional drag on the vehicle (which occurs with solutions such as roof rack). A vehicle owner can connect the fixing device 10 to their vehicle and leave it in position until needed.

Once the vehicle owner wishes to take advantage of the additional carrying support provided by the fixing device 10, then the owner can connect a suitable component into the tube 16 of the fixing device 10 and use a locking pin to lock the component into the tube 16, via the holes 26. This allows the vehicle to carry a bike rack, for example, in a secure and stable fashion, without the drawback of prior art solutions. The weight of the bike rack is supported in its entirety by the fixing device 10, which is connected to the bumper beam 24 of the vehicle, and remains in place through the connection of the bolt 20 through the hole 14 in the plate 12 which connects to the towing eye 22.

## Claims

1. A fixing device (10) comprising:
• a plate (12) provided with a hole (14),
• a tube (16) connected to the plate (12) and extending away from the plate (12),
• a tab (18) connected to one edge of the plate (12) and extending away from the plate (12), and
• a bolt (20) passing through the hole (14) of the plate (12) and for connecting to a towing eye (22) of a bumper beam (24) of a vehicle.

2. A fixing device according to claim 1, wherein the tube (16) is rectangular in cross-section.

3. A fixing device according to claim 1 or 2, wherein the tube (16) is connected to the plate (12) such that the hole (14) in the plate (12) is located at one end of the tube (16).

4. A fixing device according to claim 1 or 2, wherein the tube (16) is connected to the plate (12) at an edge of the plate (12).

5. A fixing device according to claim 4, wherein the tube (16) is connected to the plate (12) at an opposite edge of the plate (12) to the location of the tab (18), which is connected to one edge of the plate (12).

6. A fixing device according to any preceding claim, wherein the tab (18) is in a plane perpendicular to the plane of the plate (12).

7. A fixing device according to any preceding claim, wherein the tube (16) is provided with matching holes (26) on opposite sides of the tube (16).

8. A fixing device according to any preceding claim, wherein the tube (16) is in a plane perpendicular to the plane of the plate (12).

9. A fixing device according to any preceding claim, wherein the tube (16) is mounted on the plate (12).

10. A fixing device according to any preceding claim, wherein the tube (16) is open at both ends.
